# EUROPÄISCHE PATENTSCHRIFT

(11) **EP 3 081 492 B1**
(45) Veröffentlichungstag und Bekanntmachung des Hinweises auf die Patenterteilung: **10.07.2019**
(21) Anmeldenummer: 16158389.3
(22) Anmeldetag: 03.03.2016
(51) Int. Cl.: B64D 11/06, B60N 3/00

(54) **KLAPPTISCH**
FOLDING TABLE
TABLE PLIANTE

(30) Priorität: 17.04.2015 DE 202015101911 U
(43) Veröffentlichungstag der Anmeldung: 19.10.2016
(73) Patentinhaber: Fellinger, Josef, 4872 Neukirchen an der Vöckla (AT)
(72) Erfinder: Fellinger, Josef, 4872 Neukirchen an der Vöckla (AT)
(74) Vertreter: Lösch, Christoph Ludwig Klaus

(56) Entgegenhaltungen:
- DE-A1-102011 006 745
- DE-A1-102011 118 755
- US-A1- 2014 241 650
- US-A1- 2014 292 042

## Beschreibung

Die Erfindung betrifft einen Klapptisch zur Anbringung an einer Rückseite einer Rückenlehne eines Fahrgastsitzes, insbesondere eines Fluggastsitzes, wobei der Klapptisch um eine Schwenkachse zwischen einer Nichtgebrauchslage, in der der Klapptisch im Wesentlichen an der Rückseite der Rückenlehne des Fahrgastsitzes anliegt, und einer Gebrauchslage, in der der Klapptisch von der Rückseite der Rückenlehne des Fahrgastsitzes absteht, schwenkbar ist.

Derartige Klapptische sind bekannt und werden insbesondere in Flugzeugen, Zügen und Bussen eingesetzt. Allerdings besteht das Bedürfnis, neben der Klappbarkeit weitere Einstellmöglichkeiten vorzunehmen.

Der Erfindung liegt die Aufgabe zugrunde, einen gattungsgemäßen Klapptisch anzubieten, welcher besonders variabel verstellbar ist.

Die Aufgabe wird durch einen Klapptisch mit den Merkmalen des Anspruchs 1 gelöst. Vorteilhafte Ausführungsformen sind in den Unteransprüchen beschrieben.

Der erfindungsgemäße Klapptisch zur Anbringung an einer Rückseite einer Rückenlehne eines Fahrgastsitzes, insbesondere eines Fluggastsitzes, ist um eine Schwenkachse zwischen einer Nichtgebrauchslage, in der der Klapptisch im Wesentlichen an der Rückseite der Rückenlehne des Fahrgastsitzes anliegt, und einer Gebrauchslage, in der der Klapptisch von der Rückseite der Rückenlehne des Fahrgastsitzes absteht, schwenkbar und weist einen Schwenkarm sowie eine Tischplatte, welche relativ zur Längsrichtung des Schwenkarms verschiebbar ist, auf.

Durch die Verschiebbarkeit der Tischplatte relativ zur Längsrichtung des Schwenkarms kann die Ausfahrlänge der Tischplatte - und damit die Position der Tischplatte - variiert werden. Auf diese Weise kann etwa auf unterschiedliche Platzverhältnisse in verschiedenen Sitzreihen (z.B. unterscheiden sich die Platzverhältnisse in Sitzreihen mit einem Notausgang in Flugzeugen von denjenigen Reihen ohne Notausgang) reagiert werden.

Die Verschiebbarkeit der Tischplatte relativ zur Längsrichtung des Schwenkarms wird durch Seitenführungsschienen verwirklicht.

In einer vorteilhaften Ausführungsform wird die die Verschiebbarkeit der Tischplatte relativ zum Schwenkarm durch einen Endanschlag begrenzt. Auf diese Weise sind eine zuverlässige Begrenzung der Verschiebbarkeit und eine Fehlbedienung möglich. Der Endabschlag kann verschiebbar, insbesondere innerhalb eines Schlitzes verschiebbar, sein. Dies erhöht die Variabilität des Klapptisches zusätzlich, da die Ausfahrlänge individuell begrenzt werden kann.

In einer weiteren vorteilhaften Ausführungsform ist am der Tischplatte angewandten Ende des Schwenkarms eine Bohrung zur Aufnahme eines variablen Endanschlagsbolzens ausgebildet. Die Tischneigung in der Gebrauchslage kann auf diese Weise individuell eingestellt werden. Die Variabilität des Klapptisches wird somit zusätzlich erhöht.

Die Tischplatte weist eine Befestigungsplatte und Seitenführungsschienen, in welchen der Schwenkarm verschiebbar gelagert ist, auf. Die Kombination aus Befestigungsplatte und Seitenführungsschienen stellt eine besonders stabile, zuverlässige und zugleich konstruktiv einfache Möglichkeit einer verschiebbaren Lagerung der Tischplatte relativ zum Schwenkarm dar.

Die Tischplatte weist neben der Befestigungsplatte und den Seitenführungsschienen auch eine Oberschale und eine Unterschale auf, welche beide aus einem thermoplastischen Polymerwerkstoff hergestellt sein können. Sind die Befestigungsplatte, die Seitenführungsschienen, die Oberschale und die Unterschale miteinander verklebt, so stellt dies eine besonders zuverlässige und zugleich mit relativ geringem Fertigungsaufwand herstellbare Verbindung dar.

Die Erfindung ist anhand eines Ausführungsbeispiels in den Zeichnungsfiguren weiter erläutert, wobei gleiche Bezugszeichen gleiche bzw. gleichwirkende Komponenten bezeichnen. Es zeigen:
- Fig. 1: eine Draufsicht auf einen Klapptisch mit ausgeschobener Tischplatte;
- Fig. 2: eine Seitenansicht des Klapptisches aus Fig. 1;
- Fig. 3: eine Draufsicht auf den Klapptisch aus Fig. 1 mit eingeschobener Tischplatte;
- Fig. 4: eine Seitenansicht des Klapptisches aus Fig. 3; und
- Fig. 5: eine Frontansicht des Tisches aus Fig. 1, wobei lediglich der Schwenkarm, die Seitenführungsschienen, die Befestigungsplatte und der Endanschlag sichtbar sind und auf die Darstellung der Oberschale und der Unterschale aus Übersichtsgründen verzichtet wurde.

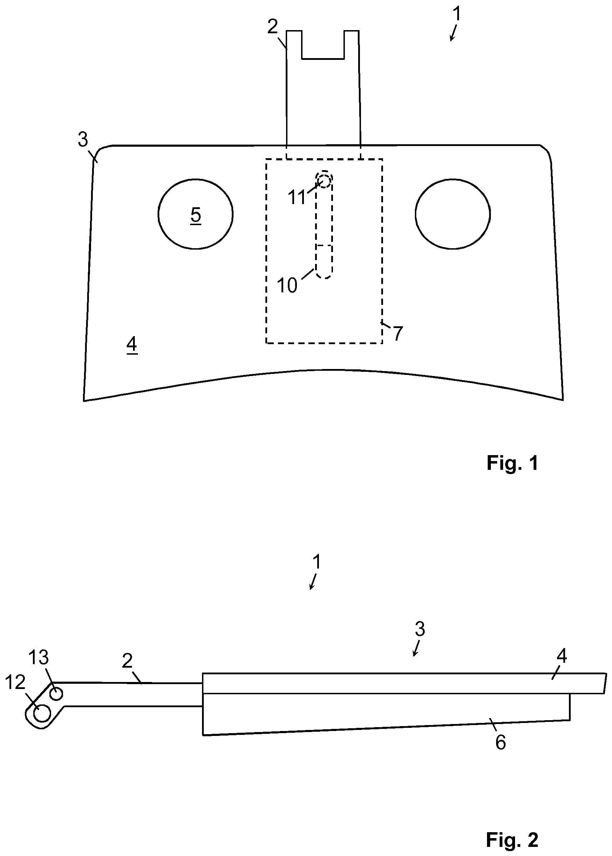

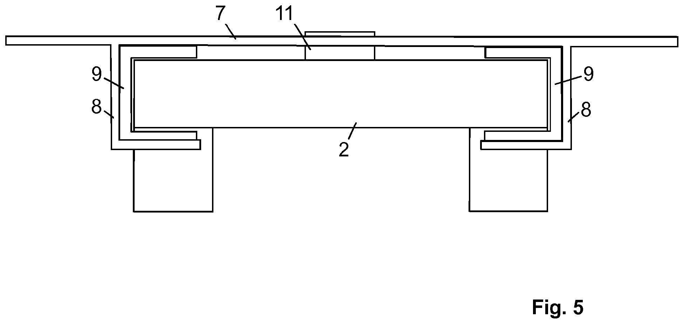

Fig. 1 bis Fig. 5 zeigen einen Klapptisch 1. Der Klapptisch 1 kann an einer Rückseite einer Rückenlehne eines Fluggastsitzes angebracht werden und besteht aus den beiden verschiebbar zueinander angebrachten Hauptkomponenten Schwenkarm 2 und Tischplatte 3.

Die Tischplatte 3 weist eine Oberschale 4, in der Vertiefungen 5 zur Aufnahme eines Getränkebechers o.ä. ausgebildet sind, sowie eine Unterschale 6 auf. Die Oberschale 4 und die Unterschale 6 sind aus thermoplastischem Polymerwerkstoff hergestellt. Zwischen der Oberschale 4 und der Unterschale 6 ist eine Befestigungsplatte 7 eingelassen.

Die Befestigungsplatte 7 weist Halterungen 8 auf, in die Seitenführungsschienen 9 eingebracht sind. In diesen Seitenführungsschienen 9 wiederum ist der Schwenkarm 2 in Form eines Gleitlagers verschiebbar gelagert, sodass die Tischplatte 3 relativ zur Längsrichtung des Schwenkarms 2 verschiebbar ist. Die Seitenführungsschienen 9 stellen somit Gleitschienen dar. Die Oberschale 4, die Unterschale 6, die Befestigungsplatte 7 und die Seitenführungsschienen 9 sind miteinander verklebt.

In der Befestigungsplatte 7 ist ein Schlitz 10 ausgebildet, dessen Längsrichtung mit der Längsrichtung des Schwenkarms 2 zusammenfällt. Der Schwenkarm 2 weist einen Endanschlag 11 auf, der innerhalb des Schlitzes 10 positioniert ist. Durch das Verschieben der Tischplatte 3 relativ zum Schwenkarm 2 gleitet der Endanschlag 11 innerhalb des Schlitzes 10 von einer ersten Endposition in eine zweite Endposition.

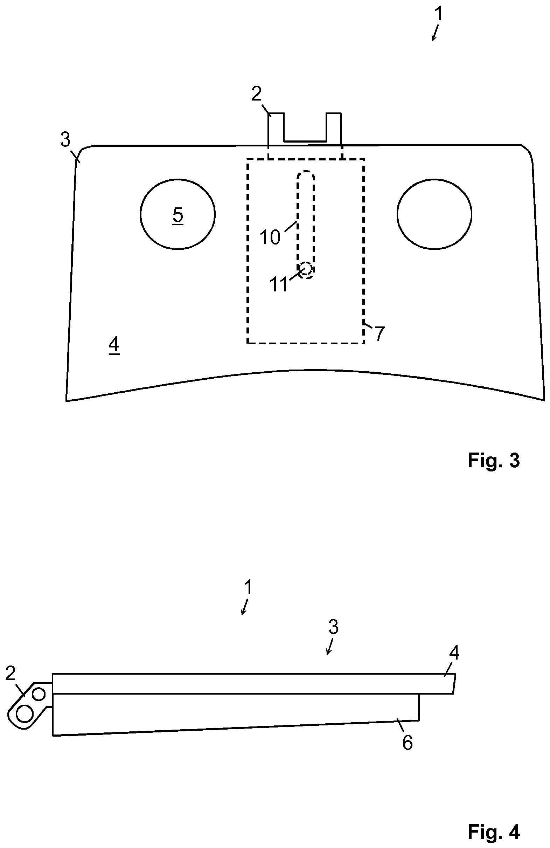

Die Befestigungsplatte 7, der Schlitz 10 und der Endanschlag 11 sind in Fig. 1 und Fig. 3 gestrichelt dargestellt, da sich diese Komponenten verdeckt unter der Oberschale 4 befinden.

Fig. 1 und Fig. 2 zeigen den Klapptisch 1 mit ausgeschobener Tischplatte 3. Der Endanschlag 11 befindet sich in einer ersten Endposition innerhalb des Schlitzes 10. Fig. 3 und Fig. 4 zeigen den Klapptisch 1 mit eingeschobener Tischplatte 3. Der Endanschlag 11 befindet sich in einer zweiten Endposition innerhalb des Schlitzes 10. Der Endanschlag 11 begrenzt somit die Verschiebbarkeit der Tischplatte 3 relativ zum Schwenkarm 2. Die Position des Endanschlags 11 ist hierbei variabel. Auf diese Weise kann die Auszugslänge der Tischplatte 3 variiert bzw. angepasst werden.

An dem der Tischplatte 3 abgewandten Endbereich des Schwenkarms 2 sind eine erste Bohrung 12 und eine zweite Bohrung 13 ausgebildet. Die erste Bohrung 12 ist auf der Schwenkachse des Klapptisches 1 angeordnet und dient beispielsweise zur Aufnahme eines Schwenkbolzens. Durch das Schwenken um die Schwenkachse wird der Klapptisch 1 zwischen einer Nichtgebrauchslage, in der der Klapptisch 1 im Wesentlichen an der Rückseite der Rückenlehne des Fluggastsitzes anliegt, und einer Gebrauchslage, in der der Klapptisch 1 von der Rückseite der Rückenlehne des Fahrgastsitzes absteht, hin- und hergeschwenkt.

Die zweite Bohrung 13 ist parallel zur ersten Bohrung 12 ausgebildet und dient zur Aufnahme eines variablen Endanschlagsbolzens. Dieser dient zur individuellen Einstellung der Tischneigung in der Gebrauchslage.

### BEZUGSZEICHENLISTE

- 1: Klapptisch
- 2: Schwenkarm
- 3: Tischplatte
- 4: Oberschale
- 5: Vertiefung
- 6: Unterschale
- 7: Befestigungsplatte
- 8: Halterung
- 9: Seitenführungsschiene
- 10: Schlitz
- 11: Endanschlag
- 12: erste Bohrung
- 13: zweite Bohrung

## Patentansprüche

1. Klapptisch (1) zur Anbringung an einer Rückseite einer Rückenlehne eines Fahrgastsitzes, insbesondere eines Fluggastsitzes, wobei der Klapptisch (1) um eine Schwenkachse zwischen einer Nichtgebrauchslage, in der der Klapptisch (1) im Wesentlichen an der Rückseite der Rückenlehne des Fahrgastsitzes anliegt, und einer Gebrauchslage, in der der Klapptisch (1) von der Rückseite der Rückenlehne des Fahrgastsitzes absteht, schwenkbar ist, wobei der Klapptisch (1) aufweist:
- einen Schwenkarm (2), und
- eine Tischplatte (3), welche entlang der Längsrichtung des Schwenkarms (2) verschiebbar ist;
**dadurch gekennzeichnet, dass** die Tischplatte (3) eine Befestigungsplatte (7) und Seitenführungsschienen (9), in welchen der Schwenkarm (2) verschiebbar gelagert ist, aufweist, wobei die Befestigungsplatte (7) zwischen einer Oberschale (4) und einer Unterschale (6) der Tischplatte (3) eingelassen ist, und wobei die Befestigungsplatte (7) Halterungen (8) aufweist, in die die Seitenführungsschienen (9) eingebracht sind.

2. Klapptisch nach Anspruch 1 mit einem Endanschlag (11), welcher die Verschiebbarkeit der Tischplatte (3) relativ zum Schwenkarm (2) begrenzt.

3. Klapptisch nach Anspruch 2, wobei der Endanschlag (11) verschiebbar, insbesondere innerhalb eines Schlitzes (10) verschiebbar, ist.

4. Klapptisch nach einem der vorhergehenden Ansprüche, wobei am der Tischplatte (3) angewandten Ende des Schwenkarms (2) eine Bohrung (13) zur Aufnahme eines variablen Endanschlagsbolzens ausgebildet ist.

5. Klapptisch nach einem der vorhergehenden Ansprüche, wobei die Oberschale (4) und die Unterschale (6) aus einem thermoplastischen Polymerwerkstoff bestehen.

6. Klapptisch nach einem der vorhergehenden Ansprüche, wobei die Oberschale (4) und die Unterschale (6) sowie zusätzlich die Befestigungsplatte (7) und die Seitenführungsschienen (9), jeweils miteinander verklebt sind.

## Claims

1. Folding table (1) for fitting on a rear side of a backrest of a passenger seat, in particular of an aircraft-passenger seat, wherein the folding table (1) can be pivoted about a pivot axis between a not-in-use position, in which the folding table (1) butts essentially against the rear side of the backrest of the passenger seat, and a use position, in which the folding table (1) projects from the rear side of the backrest of the passenger seat, wherein the folding table (1) has:
- a pivoting arm (2) and
- a table top (3), which can be displaced along the longitudinal direction of the pivoting arm (2);
**characterized in that** the table top (3) has a fastening plate (7) and lateral guide rails (9), in which the pivoting arm (2) is mounted in a displaceable manner,
wherein the fastening plate (7) is incorporated between an upper shell (4) and a lower shell (6) of the table top (3),
and wherein the fastening plate (7) has holders (8), into which the lateral guide rails (9) are introduced.

2. Folding table according to Claim 1, having an end stop (11) which delimits the displacement capability of the table top (3) relative to the pivoting arm (2).

3. Folding table according to Claim 2, wherein the end stop (11) is displaceable, in particular is displaceable within a slot (10).

4. Folding table according to one of the preceding claims, wherein a bore (13) for accommodating a variable end-stop bolt is formed at that end of the pivoting arm (2) which is directed away from the table top (3).

5. Folding table according to one of the preceding claims, wherein the upper shell (4) and the lower shell (6) consist of a thermoplastic polymer material.

6. Folding table according to one of the preceding claims, wherein the upper shell (4) and the lower shell (6), and in addition the fastening plate (7) and the lateral guide rails (9) are adhesively bonded to one another in each case.

## Revendications

1. Table pliante (1) pour le montage sur un côté arrière d'un dossier d'un siège de passager, en particulier d'un siège de passager d'avion, la table pliante (1) pouvant pivoter autour d'un axe de pivotement entre une position de non utilisation dans laquelle la table pliante (1) s'applique essentiellement contre le côté arrière du dossier du siège de passager, et une position d'utilisation dans laquelle la table pliante (1) sort du côté arrière du dossier du siège de passager, la table pliante (1) présentant :
- un bras pivotant (2), et
- un plateau de table (3) qui peut être déplacé le long de la direction longitudinale du bras pivotant (2) ;
**caractérisée en ce que** le plateau de table (3) présente une plaque de fixation (7) et des rails de guidage latéraux (9) dans lesquels est supporté de manière déplaçable le bras pivotant (2),
la plaque de fixation (7) étant incorporée entre une coque supérieure (4) et une coque inférieure (6) du plateau de table (3), et
la plaque de fixation (7) présentant des fixations (8) dans lesquelles sont introduits les rails de guidage latéraux (9).

2. Table pliante selon la revendication 1, comprenant une butée de fin de course (11) qui limite la mobilité de la table pliante (3) par rapport au bras pivotant (2).

3. Table pliante selon la revendication 2, dans laquelle la butée de fin de course (11) peut être déplacée, en particulier peut être déplacée à l'intérieur d'une fente (10).

4. Table pliante selon l'une quelconque des revendications précédentes, dans laquelle un alésage (13) pour recevoir un boulon de butée de fin de course variable est réalisé au niveau de l'extrémité du bras pivotant (2) opposée au plateau de table (3).

5. Table pliante selon l'une quelconque des revendications précédentes, dans laquelle la coque supérieure (4) et la coque inférieure (6) se composent d'un matériau polymère thermoplastique.

6. Table pliante selon l'une quelconque des revendications précédentes, dans laquelle la coque supérieure (4) et la coque inférieure (6) ainsi que la plaque de fixation (7) et les rails de guidages latéraux (9) sont dans chaque cas collés ensemble.
